## Europäisches Patentamt
## European Patent Office
## Office européen des brevets

(11) Veröffentlichungsnummer: **0 150 457 B1**

# EUROPÄISCHE PATENTSCHRIFT

(45) Veröffentlichungstag der Patentschrift: **17.04.91**

(51) Int. Cl.⁵: **H04L 12/40, G06F 13/40**

(21) Anmeldenummer: **84115951.0**

(22) Anmeldetag: **20.12.84**

(54) Schaltungsanordnung zum Anschalten eines Teilnehmers an eine Busleitung.

(30) Priorität: **26.01.84 DE 3402633**

(43) Veröffentlichungstag der Anmeldung:
**07.08.85 Patentblatt 85/32**

(45) Bekanntmachung des Hinweises auf die
Patenterteilung:
**17.04.91 Patentblatt 91/16**

(84) Benannte Vertragsstaaten:
**DE FR GB NL SE**

(56) Entgegenhaltungen:
**WO-A-80/01008**
**DE-A- 2 647 367**
**DE-A- 2 702 209**

**PATENT ABSTRACTS OF JAPAN, Band 6, Nr. 245 (P-159)[1123], 3. Dezember 1982; & JP-A-57 141 734**

(73) Patentinhaber: **Siemens Aktiengesellschaft**
**Wittelsbacherplatz 2**
**W-8000 München 2(DE)**

(72) Erfinder: **Hanss, Karl, Dipl.-Ing.**
**Feuerbachstrasse 4**
**W-6744 Kandel(DE)**
Erfinder: **Schupp, Karl, Dipl.-Ing.**
**Lameystrasse 25**
**W-7500 Karlsruhe(DE)**
Erfinder: **Block, Siegfried, Dipl.-Ing.**
**Robert-Koch-Strasse 18**
**W-6744 Kandel(DE)**

## Beschreibung

Die Erfindung betrifft eine Schaltungsanordnung gemäß dem Oberbegriff des Anspruchs 1.

In Systemen, in denen zwischen mehreren Teilnehmerstationen Informationen übertragen werden, werden häufig Busleitungen verwendet, an welche die Teilnehmerstationen parallel angeschlossen sind. Die Stationen können Informationsquellen, -senken oder kombinierte Quellen/Senken sein. Zur Anschaltung der Stationen an die Busleitung werden Sender, Empfänger oder kombinierte Sender-/Empfängerbausteine eingesetzt. Während die Empfänger über Widerstände, also passive Bauelemente, hochohmig an die Busleitung angeschlossen werden können und daher im Falle eines Kurzschlusses zwischen einer Signalader und einer anderen Signalader, gegen Masse oder gegen eine Betriebsspannung der Signalpegel auf dieser kurzgeschlossenen Ader nicht störend beeinflußt wird, liegen die Sender niederohmig an der Busleitung, was im Falle eines Kurzschlusses dazu führt, daß zumindest eine Ader der Busleitung auf konstantes Potential gelegt und die Busleitung damit blockiert wird. Eine Datenübertragung zwischen den Teilnehmerstationen ist dann nicht mehr möglich, womit praktisch das gesamte System ausgefallen ist. Zur Vermeidung dieses Problems ist es aus der DE-AS 26 47 367 bekannt, die Busleitungen und die Anschaltungen der Teilnehmerstationen redundant auszuführen. Damit wird aber der Hauptvorteil von Bussystemen, der vergleichsweise geringe Leistungsaufwand, verringert.

In der DE-AS 26 47 367 ist ferner angegeben, die Ausgangssignale von Eingabeeinheiten über Adreßdecoder, die von einer Zentralen gesteuert sind, auf eine Busleitung zu schalten. Die Adreßdecoder verhindern, daß im Falle einer Störung der Eingabeeinheiten die Busleitung blockiert wird. Die von den Adreßdecodern durchgeschalteten Signale werden über Optokoppler auf die Busleitung geführt, damit im Falle eines Kurzschlusses in einem Ausgang einer Eingabeeinheit die Busleitung nicht blockiert wird. Die Ausgänge der Eingabeeinheiten sind nichtredundant ausgeführt; Fehler in den Ausgängen der Ausgabeeinheiten können nicht festgestellt werden.

In der DE-AS 29 44 370 ist das Problem beschrieben, daß in Bussystemen eine defekte Teilnehmerstation das ganze System blockieren kann. Um dies zu verhindern, wird die defekte Station von der Datenschiene elektrisch getrennt. Hierzu werden im Störungsfalle die Leitungstreiber von einem Isolations-Steuerregister in den Sperrzustand geschaltet. Mit einer solchen Schaltung können die Stationen dann wirksam von der Busleitung getrennt werden, wenn der Fehler z. B. in der Steuerung der Schaltung liegt. Bei einem Fehler eines Leitungstreibers, z. B. eines Kurzschlusses gegen Masse, ist die Schaltung aber wirkungslos. Auch werden die Leitungstreiber nur dann gesperrt, wenn ein Fehler erkannt ist.

Aus der WO-A-8 001 008 ist eine Koppelschaltung für die Übertragung von Daten von einem Sender zu einem Bus bekannt, die in zwei Signalleitungen je einen elektronischen Schalter enthält. Diese werden mit den zu übertragenden, vom Sender abgegebenen Daten gesteuert. Dies hat zur Folge, daß im Falle eines Fehlers im Sender Signale auf die Busleitung gelangen können, welche die Signalübertragung stören.

Der vorliegenden Erfindung liegt demgegenüber die Aufgabe zugrunde, eine Schaltungsanordnung zum Anschalten von Teilnehmerstationen an eine Busleitung zu schaffen, die nicht nur verhindert, daß bei Auftreten eines Fehlers in einem Sender oder einem Empfänger einer Teilnehmerstation die Busleitung blockiert kiert wird, auch wenn dieser Fehler in einem Leitungstreiber auftritt, sondern mit der auch solche Fehler festgestellt werden können, ohne daß die Teilnehmerstationen Signale auf die Busleitung schalten.

Diese Aufgabe wird gemäß der vorliegenden Erfindung mit den im kennzeichnenden Teil des Anspruchs 1 angegebenen Maßnahmen gelöst.

Anhand der Zeichnung werden im folgenden eine Weiterbildung der Erfindung sowie weitere Vorteile und Ergänzungen näher beschrieben und erläutert.

Es zeigen
Figur 1 ein Ausführungsbeispiel der Erfindung und
Figur 2 eine zweite Ausführungsform der elektronischen Schalter.

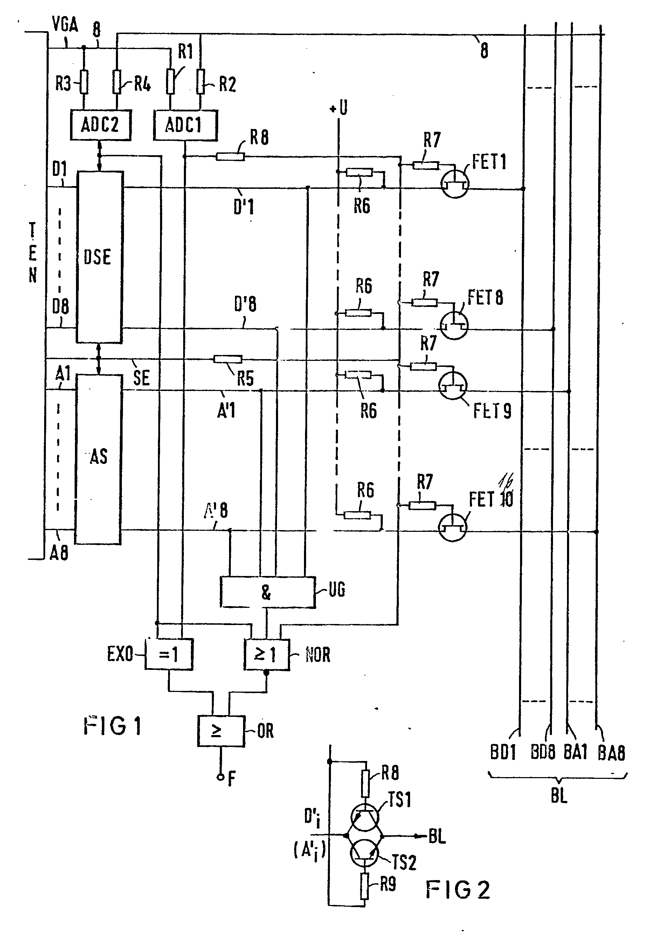

In Figur 1 ist mit BL eine Busleitung bezeichnet, die aus acht Datenleitungen BD1 ... BD8 und acht Adressenleitungen BA1 ... BA8 besteht. Zusätzlich können Steuerleitungen vorhanden sein. An die Busleitung BL sind mehrere Teilnehmerstationen angeschlossen, von denen eine in Figur 1 angedeutet und mit TEN bezeichnet ist. Zwischen die Teilnehmerstationen und die Busleitung BL sind je eine Datensende-und -empfangseinheit DSE sowie eine Adressensendeeinheit AS und als elektronische Schalter dienende Feldeffekttransistoren FET1 ... FET8, FET9 ... FET16 geschaltet. Zum Senden von Daten steuert die Teilnehmerstation TEN mit einem auf eine Leitung SE gegebenen Signal die Datensende- und -empfangseinheit sowie die Adressensendeeinheit AS auf Senden. Ferner werden die Feldeffekttransistoren FET1 ... FET16 von demselben Signal, das über einen Entkopplungswiderstand R5 geführt ist, durchgesteuert, so daß nun die Busleitung BL über Verbindungsleitungen D'1 ... D'8, A'1 ... A'8 unmittelbar mit den Einheiten DSE, AS verbunden ist. Die Verbindungsleitungen D'1 ... D'8, A'1 ... A'8 liegen über Widerstände R6 an einem Potential U. Die Einheit DSE kann über einen weiteren Entkopplungswiderstand mit den Signalen auf der Leitung SE gesteuert sein. Die Teilnehmerstation TEN schaltet ferner über Leitungen A1 ... A8 auf die Adressensendeeinheit AS die Adresse der Teilnehmerstation, zu der Daten gesendet werden sollen. Diese Daten sind über Leitungen D1 ... D8 der Datensende- und -empfängereinheit DSE zugeführt. Die Adressen und die Daten werden von den Einheiten AS, DSE niederohmig auf die Leitungen A'1 ... A'8, D'1 ... D'8 geschaltet und gelangen über die elektronischen Schalter FET1 ... FET16 auf die Busleitung BL.

Nach Beendigung des Sendevorganges wird das Signal auf der Leitung SE zurückgenommen, so daß die elektronischen Schalter FET1 ... FET16 gesperrt sind und die Ausgänge der Sendeeinheiten DSE, AS hochohmig sind. Das Potential auf den die Einheiten DSE, AS mit den elektronischen Schaltern FET1 ... FET16 verbindenden Leitungen D'1 ... D'8, A'1 ... A'8 ist dann etwa gleich dem Potential + U, mit welchem diese Verbindungsleitungen über die Widerstände R6 verbunden sind. Die UND-Bedingung am Eingang eines UND-Gliedes UG ist damit erfüllt, so daß an dessen Ausgang log. "1"-Signal erscheint, das einem NDR-Glied zugeführt ist. Dessen Ausgangssignal ist daher Null und auch das eines diesem nachgeschalteten ODER-Gliedes OR, sofern dessen zweitem Eingang, der an ein Exklusiv-ODER-Glied EXO angeschlossen ist, ebenfalls kein log. "1"-Signal zugeführt wird. Das Signal an einem Ausgang F ist somit log. "0" als Zeichen dafür, daß kein Fehler in der die Teilnehmerstation TEN mit der Busleitung BL verbindenden Schaltung vorliegt. Tritt in einer der Einheiten DSE, AS ein Fehler auf, z. B. ein Kurzschluß zwischen Daten- oder zwischen Adreßleitungen, so hat dies auf die Busleitung BL keinen Einfluß, da die Einheiten DSE, AS durch die Feldeffekttransistoren FET1 ... FET16 von der Busleitung getrennt sind. Ein Fehler der Transistoren FET1 ... FET16 wirkt sich dahin aus, daß jedesmal dann, wenn auf der zugehörigen Ader BD1 ... BA8 der Busleitung BL ein log. "0"-Signal übertragen wird, dieses auf die Verbindungsleitung D'1 ... A'8 gelangt und die UND-Bedingung am Eingang des UND-Gliedes UG aufhebt. In diesem Falle tritt am Ausgang F log. "1" als Fehlersignal auf, und die Störung wird erkannt, so daß sie behoben werden kann, bevor die Busleitung BL durch einen weiteren Fehler in den Einheiten DSE, AS blockiert wird. Entsprechend werden auch Fehler in den Einheiten DSE, AS erkannt, die dazu führen, daß bei gesperrten Transistoren FET1 ... FET16 "0"-Signal auf einer der Leitungen D'1 ... A'8 auftritt.

Während des Sendens von Informationen ist die UND-Bedingung am Eingang des UND-Gliedes UG nicht erfüllt. Damit dies nicht als Fehler angezeigt wird, ist das hinter dem Entkopplungswiderstand R5 beim Senden auftretende log. "1"-Signal auf einen zweiten Eingang des NOR-Gliedes NOR geführt, so daß dessen Ausgangssignal unabhängig vom Ausgangssignal des UND-Gliedes UG log. "0" ist. Die Abgabe eines Fehlersignals ist daher während des Sendens gesperrt.

Zum Empfangen von Daten kann je Teilnehmerstation ein Empfänger an die Busleitung BL angeschlossen sein. Die Empfängereingänge werden zweckmäßig über Widerstände von der Busleitung entkoppelt, so daß Fehler im Empfänger den Signalpegel auf der Busleitung nicht beeinflussen können. Häufig werden jedoch, wie im Ausführungsbeispiel nach Figur 1, kombinierte Datensende- und -empfängereinheiten verwendet, so daß über dieselben Anschlußleitungen die empfangenen wie die gesendeten Daten übertragen werden. Die Richtung der Datenübertragung wird mit Steuersignalen eingestellt, die der Datensende- und -empfängerschaltung zugeführt sind. Nach einer Weiterbildung der Erfindung soll auch bei derartigen Anordnungen verhindert werden, daß durch einen Fehler in der die Busleitung mit der Teilnehmerstation TEN verbindenden Schaltung die Busleitung blockiert wird. Hierzu ist die bisher beschriebene Schaltung dahin ergänzt, daß je Teilnehmerstation ein Adressendecoder ADC1 über einen Entkopplungswiderstand R2 an die die Adressen übertragenden Adern BA1 ... BA8 der Busleitung BL angeschlossen ist. Dieser vergleicht die empfangene Adresse mit der über einen Widerstand R3 zugeführten Adresse der zugehörigen Teilnehmerstation. Bei Gleichheit gibt er über einen Widerstand R8 auf die elektronischen Schalter FET1 ... FET8 ein Durchsteuersignal, so daß die Daten auf den Adern BD1 ... BD8 der Busleitung BL über die Verbindungsleitungen D'1 ... D'8 zur von Adressendecoder auf Empfang geschalteten Datensende-und -empfängereinheit DSE gelangen. Im Ruhezustand bleiben die Verbindungsleitungen D'1 ... D'8 sowie die Datensende- und -empfängereinheit DSE von der Busleitung BL getrennt, so daß Fehler in der schon oben beschriebenen Weise mit Hilfe des UND-Gliedes UG erkannt werden können. Damit während des Empfangens von Daten die Abgabe eines Fehlersignals gesperrt ist, wird das Steuersignal für die Transistoren FET1 ... FET8 dem zweiten Eingang des NOR-Gliedes NOR zugeführt.

Der Nachteil der bisher beschriebenen Schaltung mit einem einzigen Adressendecoder ADC1 ist, daß im Falle einer fehlerhaften Adressendecodierung die Transistoren FET1 ... FET8 durchgeschaltet werden, ein etwaiger Kurzschluß in der Datensende- und -empfängereinheit DSE auf der Busleitung BL wirksam wird und die Teilnehmerstation TEN Reaktionen ausführt, da sie angesprochen zu sein scheint. Es wird also die Busleitung BL zumindest teilweise blockiert kiert. Um diesen Fehler zu vermeiden, ist ein zweiter Adressendecoder ADC2 vorgesehen. Die Ausgangssignale der beiden Adressendecoder ADC1, ADC2 werden in dem schon erwähnten Exklusiv-ODER-Glied EXO miteinander verglichen, das bei Ungleichheit über das ODER-Glied OR ein Fehlersignal abgibt. Während der Adressendecoder ADC1 die Feldeffekttransistoren FET1 ... FET8 ansteuert, ist an den Ausgang des Adressendecoders ADC2 der Steuereingang der Datensende- und -empfängereinheit DSE angeschlossen. Stellt der Decoder ADC die Übereinstimmung der beiden ihm zugeführten Adressen fest, schaltet er die Einheit DSE auf Empfang. Im Falle einer fehlerhaften Adressendecodierung können somit nur entweder die Transistoren durchgeschaltet oder die Einheit DSE auf Empfang geschaltet werden. Eine gleichzeitige Ansteuerung der Transistoren und der Einheit DSE ist nicht möglich, so daß die Signale auf der Busleitung nicht gestört werden.

Das Ausführungsbeispiel der Erfindung nach Figur 1 kann im Rahmen der Erfindung in vielerlei Hinsicht verändert werden. Beispielsweise können anstelle der Feldeffekttransistoren FET1 ... FET16 auch beliebige andere elek tronische Schalter verwendet werden, z. B. der nach Figur 2. Dieser besteht aus zwei Transistoren TS1, TS2, die antiparallel geschaltet sind und die über je einen Widerstand R8, R9 angesteuert sind. Die in Figur 1 eingezeichneten Vorwiderstände R7 können dann entfallen. Der Emitter des Transistors TS1 und der Kollektor des Transistors TS2 sind mit den Verbindungsleitungen D'1 ... A'8 und der Kollektor des Transistors TS1 und der Emitter des Transistors TS2 mit der Busleitung BL verbunden.

Die Ansteuerung der elektronischen Schalter kann aufgeteilt sein, derart, daß zum Senden von Adressen nur die Transistoren FET9 ... FET16 und zum Senden und zum Empfangen von Daten die Transistoren FET1 ... FET8 durchgesteuert sind. Entsprechend wird man dann auch das UND-Glied UG aufteilen, so daß Fehler auf den Datenverbindungsleitungen D'1 ... D'8 und auf den Adressenverbindungsleitungen A'1 ... A'8 getrennt erkannt werden können. Die Logikschaltung, die Störungen durch Vergleich der Potentiale auf den Verbindungsleitungen erkennt, die Abgabe von Fehlersignalen während des Sendens oder Empfangens von Signalen sperrt und die Funktion der Adressendecoder ADC1, ADC2 überprüft, kann auch in anderer als der dargestellten Weise aufgebaut sein, um diese gewünschte Funktion zu erfüllen.

## Ansprüche

1. Schaltungsanordnung zum Anschalten eines Teilnehmers an eine Busleitung (BL) mit einem Sender (DSE, AS), der beim Senden von Signalen diese niederohmig auf die Busleitung (BL) schaltet und dessen Ausgänge im Ruhezustand hochohmig sind, und mit elektronischen Schaltern (FET1 ... FET8, FET9 ... FET16), die zwischen den Ausgängen des Senders (DSE) und der Busleitung (BL) liegen, die beim Senden von Signalen durchgeschaltet sind und die mit von den zu sendenden Signalen verschiedenen Signalen gesteuert sind, **dadurch gekennzeichnet,** daß die Verbindungsleitungen (D'1 ... D'8, A'1 ... A'8) zwischen dem Sender (DSE, AS) und den elektronischen Schaltern (FET1 ... FET8, FET9 ... FET16) über je einen Widerstand (R6) an einem konstanten Potential (+ U) liegen und daß an diese Verbindungsleitungen ein Logikglied, vorzugsweise ein UND-Glied (UG), angeschlossen ist, das bei unterschiedlichen Potentialen auf den Verbindungsleitungen ein Fehlersignal abgibt.

2. Schaltungsanordnung nach Anspruch 1, **dadurch gekennzeichnet,** daß die Abgabe eines Fehlersignals während des Sendens gesperrt ist.

3. Schaltungsanordnung nach Anspruch 1 oder 2, **dadurch gekennzeichnet,** daß die elektronischen Schalter Einzeltransistoren sind.

4. Schaltungsanordnung nach einem der Ansprüche 1 bis 3, **dadurch gekennzeichnet,** daß der Sender in einem Sender- und Empfängerbaustein (DSE) enthalten ist und daß an die Busleitung (BL) ein Adressendecoder (ADC1) angeschlossen ist, der, wenn die empfangene Adresse mit der des Teilnehmers übereinstimmt, die elektronischen Schalter (FET1 ... FET8) durchsteuert.

5. Schaltungsanordnung nach Anspruch 4, **dadurch gekennzeichnet,** daß an die Busleitung ein zweiter Adressendecoder (ADC2) angeschlossen ist, der, wenn die empfangene Adresse mit der des Teilnehmers übereinstimmt, den Sender- und Empfängerbaustein (DSE) für den Empfang von Daten freigibt.

6. Schaltungsanordnung nach Anspruch 4 oder 5, **dadurch gekennzeichnet,** daß an die Adressendecoder (ADC1, ADC2) und an das das Fehlersignal abgebende Logikglied (UG) eine Fehlersignal-Sperrschaltung (NOR) angeschlossen ist, die bei Übereinstimmung von empfangener Adresse und intern eingestellter Adresse das Fehlersignal sperrt.

**7.** Schaltungsanordnung nach Anspruch 5, **dadurch gekennzeichnet**, daß an die Adressendecoder (ADC1, ADC2) ein Antivalenzglied (EXO) angeschlossen ist, das, wenn die Ausgangssignale der Adressendecoder antivalent sind, ein Fehlersignal abgibt.

## Claims

**1.** Circuit arrangement for connecting a user to a bus line (BL), having a transmitter (DSE, AS) which, when signals are transmitted, connects these signals in low-resistance manner to the bus line (BL), and the outputs of which transmitter are high-resistance in the resting state, and having electronic switches (FET1... FET8, FET9 ... FET16), which are located between the outputs of the transmitter (DSE) and the bus line (BL), are switched through when signals are transmitted, and are controlled with signals different from the signals to be transmitted, **characterised in that** the connection lines (D'1 ... D'8, A'1 ... A'8) between the transmitter (DSE, AS) and the electronic switches (FET1 ... FET8, FET9 ... FET16) are connected by way of a respective resistance (R6) to a constant potential (+U), and in that, to these connection lines, there is connected a logic element, preferably an AND element (UG), which, in the event of different potentials on the connection lines, emits a fault signal.

**2.** Circuit arrangement according to claim 1, **characterised in that** the delivery of a fault signal is blocked during transmission.

**3.** Circuit arrangement according to claim 1 or 2, **characterised in that** the electronic switches are individual transistors.

**4.** Circuit arrangement according to one of claims 1 to 3, **characterised in that** the transmitter is contained in a transmitter-receiver module (DSE), and in that, to the bus line (BL), there is connected an address decoder (ADC1) which, if the address received corresponds to the address of the user, connects through the electronic switches (FET1 ... FET8).

**5.** Circuit arrangement according to claim 4, **characterised in that**, to the bus line, there is connected a second address decoder (ADC2) which, when the address received corresponds to the address of the user, releases the transmitter-receiver module (DSE) for receiving data.

**6.** Circuit arrangement according to claim 4 or 5, **characterised in that**, to the address decoders (ADC1, ADC2), and to the logic element (UG) which delivers the fault signal, there is connected a fault signal inhibiting circuit (NOR) which, in the event of the correspondence of the address received and the address internally set, blocks the fault signal.

**7.** Circuit arrangement according to claim 5, **characterised in that**, to the address decoders (ADC1, ADC2), there is connected an exclusive-OR element (EXO) which, when the output signals of the address decoders are not the same, emits a fault signal.

## Revendications

**1.** Montage pour raccorder un abonné à une ligne formant bus (BL), comportant un émetteur (DSE,AS), qui, lors de l'émission de signaux, applique ces signaux, selon une liaison à faible valeur ohmique, à la ligne formant bus (BL) et dont les sorties présentent une forte valeur ohmique à l'état de repos, et des interrupteurs électroniques (FET1... FET8, FET9... FET16), qui sont situés entre les sorties de l'émetteur (DSE) et la ligne formant bus (BL), qui sont placés à l'état conducteur lors de l'émission de signaux et qui sont commandés par des signaux différents des signaux devant être émis, caractérisé par le fait que les lignes de liaison (D'1... D'8, A'8... A'8) entre l'émetteur (DSE,AS) et les interrupteurs électroniques (FET1... FET8, FET9... FET16) sont raccordés à un potentiel constant (+U) par l'intermédiaire de résistances respectives (R6), et qu' à ces lignes de liaison est raccordé un circuit logique, de préférence un circuit ET (UG), qui délivre un signal de défaut dans le cas de potentiels différents dans les lignes de liaison.

**2.** Montage suivant la revendication 1, caractérisé par le fait que la délivrance d'un signal de défaut est bloquée pendant l'émission.

**3.** Montage suivant la revendication 1 ou 2, caractérisé par le fait que les interrupteurs électroniques sont des transistors individuels.

**4.** Montage suivant l'une des revendications 1 à 3, caractérisé par le fait que l'émetteur est logé dans un module d'émission et de réception (DSE) et qu'à la ligne formant bus (BL) est raccordée un décodeur d'adresses (ADC1), qui, lorsque l'adresse reçue coïncide avec celle de l'abonné, rend passant les interrupteurs électroniques (FET1... FET8).

5. Montage suivant la revendication 4, caractérisé par le fait qu'à la ligne formant bus est raccordé un second décodeur d'adresses (ADC2), qui, lorsque l'adresse reçue coïncide avec celle de l'abonné, autorise le module d'émission et de réception (DSE) pour la réception de données.

6. Montage suivant la revendication 4 ou 5, caractérisé par le fait qu'aux décodeurs d'adresses (ADC1, ADC2) et au circuit logique (UG) délivrant le signal de défaut est raccordé un circuit NOR de blocage du signal de défaut, qui bloque le signal d'erreur, en cas de coïncidence entre l'adresse reçue et l'adresse réglée de façon interne.

7. Montage suivant la revendication 5, caractérisé par le fait qu'aux décodeurs d'adresses (ADC1,ADC2) est raccordé un circuit OU-Exclusif (EXO), qui délivre un signal de défaut lorsque les signaux de sortie des décodeurs d'adresses sont antivalents.

FIG 1

FIG 2